# EUROPÄISCHE PATENTSCHRIFT

(11) **EP 0 401 497 B1**
(45) Veröffentlichungstag und Bekanntmachung des Hinweises auf die Patenterteilung: **20.07.1994**
(21) Anmeldenummer: 90107213.2
(22) Anmeldetag: 14.04.1990
(51) Int. Cl.: B60N 3/02

(54) **Haltegriff, insbesondere für Fahrzeuge**
Hand grip, in particular for vehicles
Poignée de maintien, en particulier pour véhicules

(30) Priorität: 06.06.1989 DE 3918425
(43) Veröffentlichungstag der Anmeldung: 12.12.1990
(73) Patentinhaber: Gebr. Happich GmbH, D-42097 Wuppertal (DE)
(72) Erfinder: Dietz, Günter, D-5600 Wuppertal 1 (DE); Simoleit, Horst, D-5620 Velbert 15 (DE); Flüshöh, Dieter, D-5830 Schwelm (DE)

(56) Entgegenhaltungen:
- EP-A- 0 097 219
- DE-A- 1 530 987
- DE-A- 1 779 991
- DE-A- 2 709 185
- DE-A- 2 718 402
- DE-A- 3 607 744
- DE-A- 3 928 871
- FR-A- 2 073 778
- FR-A- 2 279 584
- GB-A- 1 160 887
- GB-A- 2 023 077

## Beschreibung

Die Erfindung bezieht sich auf einen Haltegriff, insbesondere für Fahrzeuge, mit einem bügelförmigen Griffkörper, der aus einem mit einem schlauchartigen Überzug versehenen Kern besteht, dessen abgewinkelte, überzugsfreie Endbereiche an einer Fahrzeugkarosserie befestigbar sind, wobei jeder Befestigungsbereich mit einer Zierkappe abdeckbar ist.

Ein Haltegriff der gattungsgemäßen Art ist in der DE-A-1 530 987 gezeigt. Bei diesem bekannten Haltegriff sind die Befestigungsbereiche durch auf dem Griffbügel verschiebbar angeordnete Zierkappen abdeckbar, deren Halterung an den Griff-Füßen durch Klemmleisten erfolgt. Als nachteilig wird bei diesem bekannten Haltegriff empfunden, daß die die Befestigungsbereiche abdeckenden Zierkappen relativ stark auftragen und von der Befestigungsfläche abstehen. Auch ist das Aufklipsen der Zierkappen auf die Klemmleisten der Griff-Füße dann schwierig, wenn der Haltegriff in Bereichen eines Fahrzeuges anzuordnen ist, welche mit einer elastischen Fahrzeugauskleidung, wie Fertighimmel, versehen sind. Dabei muß die Fahrzeugauskleidung entweder genügend kompressibel sein, um ein zuverlässiges Verklipsen der Zierkappen zu gewährleisten, oder mit Ausstanzungen versehen werden, worunter aber das gefällige Aussehen leidet, weil dann unschöne Spalten und Fugen entstehen.

Aus der GB-A-1 160 887 ist weiterhin ein Haltegriff für Fahrzeuge bekanntgeworden, der eine zugfeste Einlage mit einer Ummantelung aufweist. Die Ummantelung ist mit einer folienartigen Kunststoffhülle überzogen und die Enden dieser Hülle sind freigeschnitten und bilden Jeweils einen als Zierkappe dienenden Lappen. Die zugfeste Einlage trägt an jedem Ende ein aus einem U-förmigen Blechsockel gebildetes Böckchen, welches mit der Einlage fest verklammert ist. Befestigungsschrauben durchsetzen das Böckchen und die zugfeste Einlage und sind durch die Zierkappen abdeckbar.

Der vorliegenden Erfindung liegt nun die Aufgabe zugrunde, einen Haltegriff der eingangs genannten Art so zu gestalten, daß er im Innenbereich eines Fahrzeuges insbesondere dort mit Vorteil anordbar ist, wo sich eine elastische Fahrzeugauskleidung, vornehmlich ein Fertighimmel befindet, wobei weiterhin insbesondere eine fahrzeugauskleidungs- bzw. dachhimmeloberflächenbündige Haltegriffbefestigung angestrebt wird. Weiterhin soll der Haltegriff so gestaltet sein, daß die Ränder von Ausstanzungen in der Fahrzeugauskleidung, die von den Endbereichen des Kerns bei der Haltegriffbefestigung durchgriffen werden, eine zuverlässige Abdeckung erfahren.

Diese Aufgabe wird erfindungsgemäß dadurch gelöst, daß jeder Endbereich des Kerns mit einem Formkörper bestückt ist, welcher aus einer auf dem Endbereich des Kerns aufliegenden und daran befestigten Bodenplatte und einer damit über zum Formkörper gehörige Wände verbundenen, von der Bodenplatte beabstandeten Kopfplatte besteht, wobei letztere eine von einem Kragen umrahmte Öffnung aufweist, in die ein Endbereich des Griffkörpers eintaucht und die im übrigen durch die Zierkappe kragenbündig verschließbar ist, wobei der Formkörper einen einstückig angeformten, die Bodenplatte verlängernden Materiallappen aufweist, der über ein Filmscharnier so an der Bodenplatte angeformt ist, daß er um das freie Ende des Endbereichs des Kerns herumklappbar ist, um den Endbereich zu untergreifen.

Durch diese erfindungsgemäßen Maßnahmen wird die gestellte Aufgabe in optimaler Weise gelöst. Dabei konnte eine oberflächenbündige Haltegriffbefestigung erzielt werden, so daß nur noch der Griffbügel die Fahrzeugauskleidung überragt. Weiterhin werden die die Ausstanzungen in der Fahrzeugauskleidung umgebenen Randbereiche durch die an den Endbereichen des Kerns angeordneten Formkörper bzw. deren Kopfplatten in Richtung zur Karosserie gezwungen, so daß die Zierkappe insoweit völlig entlastet ist. Ferner wird durch die Erfindung eine unmittelbare Anlage des abgewinkelten Endbereichs des Kerns auf dem Karosserieblech vermieden, was insbesondere dann von Vorteil ist, wenn der Kern des Griffteils aus einem Stahlband gebildet ist.

Gemäß der Erfindung ist der Kragen der Kopfplatte zum Abdecken eines, eine Montageöffnung in einer elastischen Fahrzeugauskleidung, wie Fertighimmel, umgebenden Randbereich vorgesehen. Dadurch wird ein relativ großer Toleranzausgleich (Toleranzen können leicht im Zusammenspiel zwischen Ausstanzungen in der Karosserie und solchen im Fahrzeugauskleidungsteil auftreten) ermöglicht.

In Ausgestaltung der Erfindung ist der Formkörper als Kunststoff-Spritzgußteil ausgebildet und daher einfach und kostengünstig herstellbar. Der Formkörper kann mittels eines diesen und eine Bohrung im Endbereich des Kerns durchsetzenden Hohlniets am Kern befestigt sein und einen einstückig angeformten, eine zweite Bohrung im Endbereich des Kerns durchsetzenden Zapfen als Verdrehschutz aufweisen, zumal der Zapfen auch eine Öffnung in der Karosseriewand durchdringen soll.

Weiterhin kann vorgesehen sein, daß der Materiallappen eine erste Öffnung zum Durchlassen des Zapfens, eine zweite Öffnung zum Durchlassen des Hohlniets und weiterhin angeformte Klipselemente aufweist, die die Bodenplatte randseitig umgreifen.

Die Zierkappe des erfindungsgemäßen Haltegriffs ist bevorzugterweise als separates Kunststoff-Spritzgußteil ausgeführt und weist einendig eine einstückig angeformte, in einem Wanddurchbruch des Formkörpers einrastbare Rastnase und anderendig zwei einander gegenüberliegende, einstückig angeformte Klipselemente zum Hinterrasten des Öffnungsrandes der Kopfplatte auf. Für den bündigen Abschluß der Zierkappe weist der Öffnungsrand der Kopfplatte eine die Zierkappe abstützende, stufenförmige Absetzung auf. Auch ist die Zierkappe einendig, in Anpassung an den, in die Öffnung des Formkörpers eintauchenden Endbereich des Griffkörpers, hohlrund ausgebildet. Ferner ist die Zierkappe unverlierbar am Formkörper gehalten, indem vorgesehen ist, daß die Zierkappe unterseitig einen einstückig angeformten, durch den Wanddurchbruch des Formkörpers gesteckten Bandkörper mit ankerförmigen Endbereich aufweist. Der Vorteil dieser Maßnahme ist zum einen darin zu sehen, daß sämtliche Teile des erfindungsgemäßen Haltegriffs zu einer Montageeinheit zusammengefaßt sind und ist zum anderen darin begründet, daß eine Farbechtheit zwischen Formteil einerseits und Zierkappe andererseits leicht eingehalten werden kann, zumal es ohne weiteres möglich ist, diese Teile jeweils in einem Schuß zu spritzen.

Schließlich kann eine Weiterbildung der Erfindung noch darin bestehen, daß der in die Öffnung des Formkörpers eintauchende Endbereich des Griffkörpers durch eine seiner Form angepaßten, schräg ausgerichteten Wandung des Formkörpers abgestützt ist. Hierdurch wird neben einem guten Aussehen des Haltegriffs gleichzeitig sichergestellt, daß sich die Nägel oder Zapfen, mittels denen der schlauchartige Überzug beidendig am Kern festgelegt ist, nicht lösen oder herausrutschen können.

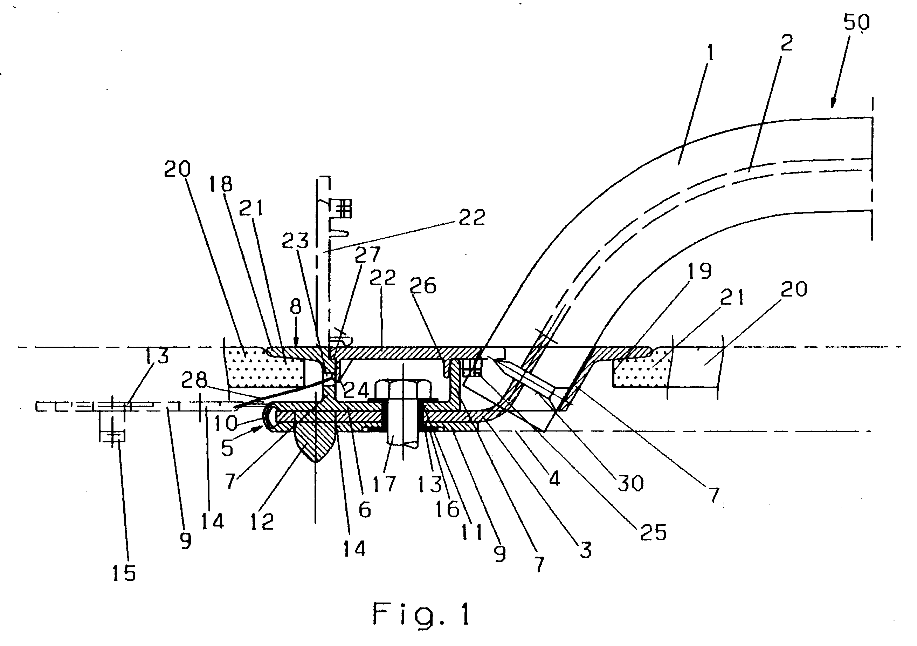

Ein Ausführungsbeispiel der Erfindung wird im folgenden anhand der Zeichnung näher erläutert. Es zeigen
- Fig. 1: einen Endbereich des Haltegriffes im Längsschnitt gesehen und
- Fig. 2: eine Draufsicht auf den Haltegriff nach Fig. 1.

Der neue Haltegriff ist insbesondere zur Anordnung am Dachbereich eines Fahrzeuges bestimmt und soll eine Fahrzeugauskleidung, insbesondere einen Fertighimmel, überspannen.

Im einzelnen besteht der neue Haltegriff aus einem mit einem schlauchartigen Überzug 1 versehenen Kern 2, dessen abgewinkelte, überzugsfreie Endbereiche 3 an einer Fahrzeugkarosserie 4 befestigbar sind. Der Überzug 1 kann aus einem aufgeschäumten Kunststoffmaterial und der Kern 2 kann aus einem Stahlband gebildet sein.

Jeder Endbereich 3 des Kerns 2 ist mit einem als Kunststoff-Spritzgußteil ausgebildeten Formkörper 5 bestückt. Der Formkörper 5 umfaßt eine Bodenplatte 6, Wände 7 und eine Kopfplatte 8. Die Bodenplatte 6 ist mit einem diese verlängernden Materiallappen 9 ausgebildet, wobei als Verbindung zwischen der Bodenplatte 6 und dem Materiallappen 9 ein Filmscharnier 10 vorgesehen ist. Die Bodenplatte 6 weist einen Lochdurchzug 11 und einen angeformten, nach unten gerichteten Zapfen 12 auf. Der Materiallappen 9 ist mit einem ersten Lochdurchzug 13, einem zweiten Lochdurchzug 14 und mit randseitig angeformten Klipselementen 15 ausgebildet.

Zur Festlegung des Formkörpers 5 am Kern 2 wird die Bodenplatte 6 auf dem Endbereich 3 des Kerns 2 aufgelegt, der mit dem Lochdurchzug 11 und dem Zapfen 12 fluchtende Bohrungen aufweist. Nach dem Einsetzen des Zapfens 12 in die entsprechende Bohrung des Endbereichs 3 wird der Materiallappen 9 um das freie Ende des Endbereichs herumgeschwenkt, so daß der Zapfen 12 den Lochdurchzug 14 zu durchsetzen vermag und die Klipselemente 15 die Bodenplatte 6 zu übergreifen vermögen. Alsdann werden die Bodenplatte 6 und der Materiallappen 9 zusätzlich am Endbereich 3 des Kerns 2 festgelegt, und zwar durch einen Hohlniet 16, der auch zum Durchführen eines, hier als Schraube ausgeführten Befestigungselements 17 für die Festlegung des Haltegriffes an der Fahrzeugkarosserie 4 dient.

Die über die Wände 7 mit der Bodenplatte 6 mit Abstand verbundene Kopfplatte 8 wird im wesentlichen durch einen, eine Öffnung des Formkörpers 5 umrahmenden Kragen 18 gebildet. Dieser Kragen 18 legt sich bei der Montage des Haltegriffs auf den eine Ausstanzung 19 im Fertighimmel 20 begrenzenden Randbereich 21 des Fertighimmels auf und zieht diesen Randbereich 21 beim Anschrauben des Haltegriffes, wie dargestellt, in Richtung zur Fahrzeugkarosserie ein, so daß eine dachhimmeloberflächenbündige Haltegriffbefestigung vorliegt. Zusätzlich wird der Dachhimmel durch diese Maßnahme im Bereich jeder Griffbefestigungsstelle gehalten.

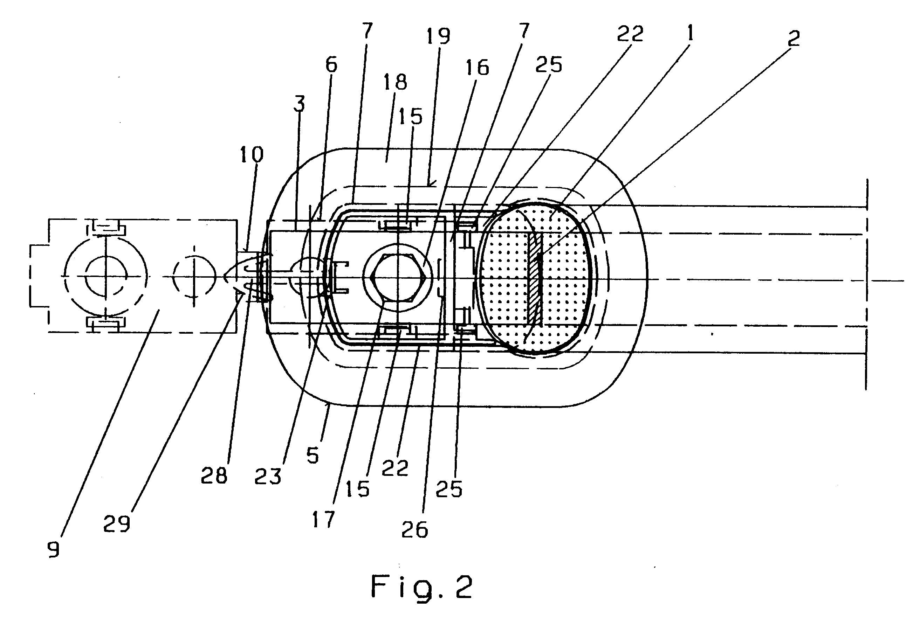

Die Öffnung des Formkörpers 5 nimmt den Endbereich des Griffbügels, des Befestigungselements 17 sowie die Zierkappe 22 auf. Die Zierkappe 22 ist ein separat gefertigtes Kunststoff-Spritzgußteil und besitzt im wesentlichen die Form eines flachen Deckels. Die Zierkappe 22 weist einendig eine einstückig angeformte, in einen Wanddurchbruch 23 des Formkörpers 5 einrastbare Rastnase 24 und anderendig zwei einander gegenüberliegende, einstückig angeformte Klipselemente 25 zum Hinterrasten des Öffnungsrandes der Kopfplatte 8 auf. Zudem ist ein sich an einer Wand 7 des Formkörpers 5 anlegender Stützsteg 26 angeformt. Der Öffnungsrand der Kopfplatte 8 ist mit einer, die Zierkappe 22 abstützenden, stufenförmigen Absetzung 27 ausgebildet. Die Zierkappe ist einendig, in Anpassung an den, in die Öffnung des Formkörpers 5 eintauchenden Endbereich des Griffkörpers, wie insbesondere aus Fig. 2 ersichtlich ist, hohlrund ausgebildet. Die Zierkappe 22 ist am Formkörper 5 unverlierbar festgelegt, wozu sie mit einem Bandstreifen 28 einstückig ausgebildet ist, dessen freies Ende als Anker 29 gestaltet und durch den Wanddurchbruch 23 gesteckt ist.

Wie die Zeichnung weiterhin erkennen läßt, ist der in die Öffnung des Formkörpers 5 eintauchende Endbereich des Griffkörpers 50 durch eine seiner Form angepaßten schrägausgerichteten Wandung 7 des Formkörpers 5 abgestützt, wodurch sich auch eine Sicherung des den Überzug 1 am Kern festlegenden Nagels 30 ergibt.

## Patentansprüche

1. Haltegriff, insbesondere für Fahrzeuge, mit einem bügelförmigen Griffkörper (50), der aus einem mit einem schlauchartigen Überzug (1) versehenen Kern (2) besteht, dessen abgewinkelte, überzugsfreie Endbereiche (3) an einer Fahrzeugkarosserie (4) befestigbar sind, wobei jeder Befestigungsbereich mit einer Zierkappe (22) abdeckbar ist, dadurch gekennzeichnet, daß jeder Endbereich (3) des Kerns (2) mit einem Formkörper (5) bestückt ist, welcher aus einer auf dem Endbereich (3) des Kerns (2) aufliegenden und daran befestigten Bodenplatte (6) und einer damit über zum Formkörper (5) gehörige Wände (7) verbundenen, von der Bodenplatte (6) beabstandeten Kopfplatte (8) besteht, wobei letztere eine von einem Kragen (18) umrahmte Öffnung aufweist, in die ein Endbereich des Griffkörpers (50) eintaucht und die im übrigen durch die Zierkappe (22) kragenbündig verschließbar ist, wobei der Formkörper (5) einen einstückig angeformten, die Bodenplatte (6) verlängernden Materiallappen (9) aufweist, der über ein Filmscharnier (10) so an der Bodenplatte (6) angeformt ist, daß er um das freie Ende des Endbereichs (3) des Kerns (2) herumklappbar ist, um den Endbereich (3) zu untergreifen.

2. Haltegriff nach Anspruch 1, dadurch gekennzeichnet, daß der Kragen (18) zum Abdecken eines eine Montageöffnung (19) in einer elastischen Fahrzeugauskleidung, wie Fertighimmel (20), umgebenden Randbereich (21) vorgesehen ist.

3. Haltegriff nach Anspruch 1 oder 2, dadurch gekennzeichnet, daß der Formkörper (5) als Kunststoff-Spritzgußteil ausgebildet ist.

4. Haltegriff nach zumindest einem der Ansprüche 1 bis 3, dadurch gekennzeichnet, daß der Formkörper (5) mittels eines diesen und eine Bohrung im Endbereich des Kerns durchsetzenden Hohlniets (16) am Kern (2) befestigt ist und daß der Formkörper (5) einen einstückig angeformten, eine zweite Bohrung im Endbereich des Kerns (2) durchsetzenden Zapfen (12) als Verdrehschutz aufweist.

5. Haltegriff nach einem der Ansprüche 1 bis 4, dadurch gekennzeichnet, daß der Materiallappen (6) eine erste Öffnung (14) zum Durchlaß des Zapfens (12), eine zweite Öffnung (13) zum Durchlaß des Hohlniets (16) und weiterhin angeformte Klipselemente (15) aufweist, die die Bodenplatte (6) randseitig umgreifen.

6. Haltegriff nach zumindest einem der Ansprüche 1 bis 5, dadurch gekennzeichnet, daß die Zierkappe (22), die als separates Kunststoff-Spritzgußteil ausgeführt ist, einendig eine einstückig angeformte, in einen Wanddurchbruch 23 des Formkörpers (5) einrastbare Rastnase (24) und anderendig zwei einander gegenüberliegende, einstückig angeformte Klipselemente (25) zum Hinterrasten des Öffnungsrandes der Kopfplatte (8) aufweist.

7. Haltegriff nach wenigstens einem der Ansprüche 1 bis 6, dadurch gekennzeichnet, daß der Öffnungsrand der Kopfplatte (8) eine die Zierkappe (22) abstützende, stufenförmige Absetzung (27) aufweist.

8. Haltegriff nach zumindest einem der Ansprüche 1 bis 7, dadurch gekennzeichnet, daß die Zierkappe (22) einendig, in Anpassung an den, in die Öffnung des Formkörpers (5) eintauchenden Endbereich des Griffkörpers (50), hohlrund ausgebildet ist.

9. Haltegriff, nach zumindest einem der Ansprüche 1 bis 8, dadurch gekennzeichnet, daß die Zierkappe (22) unverlierbar am Formenkörper (5) gehalten ist, indem vorgesehen ist, daß die Zierkappe (22) unterseitig einen einstückig angeformten, durch den Wanddurchbruch (23) des Formkörpers (5) gesteckten Bandkörper (28) mit ankerförmigen Endbereich aufweist.

10. Haltegriff nach zumindest einem der Ansprüche 1 bis 9, dadurch gekennzeichnet, daß der in die Öffnung des Formkörpers (5) eintauchende Endbereich des Griffkörpers (50) durch eine seiner Form angepaßten, schräg ausgerichteten Wandung (7) des Formkörpers (5) abgestützt ist.

## Claims

1. Grab handle, particularly for vehicles, having a handle-shaped handle element (50), consisting of a core (2) which is provided with a hose-like coating (1) and the angled-off, coating-free end regions (3) of which can be fastened to a vehicle body (4), each fastening region being able to be covered over with an ornamental cap (22), characterized in that each end region (3) of the core (2) is equipped with a moulded element (5) comprising a baseplate (6), which rests on the end region (3) of the core (2) and is fastened thereto, and a headplate (8), which is connected to the said baseplate by walls (7) belonging to the moulded element (5) and is distanced from the baseplate (6), the said headplate exhibiting an opening which is framed by a collar (18) and into which an end region of the handle element (50) intrudes and which, moreover, can be sealed off, flush with the collar, by the ornamental cap (22), the moulded element (5) exhibiting a material flap (9), which is formed on in one piece and prolongs the baseplate (6) and which is formed onto the baseplate (6), by means of a film hinge (10), in such a way that it can be tilted around the free end of the end region (3) of the core (2) so as to under-grip the end region (3).

2. Grab handle according to Claim 1, characterized in that the collar (18) is provided in order to cover an edge region (21) surrounding an assembly opening (19) in an elastic vehicle trim, such as prefabricated headlining (20).

3. Grab handle according to Claim 1 or 2, characterized in that the moulded element (5) is configured as a plastics injection-moulded part.

4. Grab handle according to at least one of Claims 1 to 3, characterized in that the moulded element (5) is fastened to the core (2) by means of a hollow rivet (16), which passes through the said moulded element and through a bore in the end region of the core, and in that the moulded element (5) exhibits, as anti-twist protection, a pin (12) which is formed on in one piece and passes through a second bore in the end region of the core (2).

5. Grab handle according to one of Claims 1 to 4, characterized in that the material flap (6) [sic] exhibits a first opening (14) for the passage of the pin (12), a second opening (13) for the passage of the hollow rivet (16) and, furthermore, formed-on clip elements (15) which enclasp the baseplate (6) on the edge side.

6. Grab handle according to at least one of Claims 1 to 5, characterized in that the ornamental cap (22), which is constructed as a separate plastics injection-moulded part, exhibits, at one end, a latch boss (24), which is formed on in one piece and can be latch-locked into a wall aperture (23) in the moulded element (5), and, at the other end, two clip elements (25), which lie opposite each other and are formed on in one piece, for back-latching the edge of the opening in the headplate (8).

7. Grab handle according to at least one of Claims 1 to 6, characterized in that the edge of the opening in the headplate (8) exhibits a step-shaped offset (27) supporting the ornamental cap (22).

8. Grab handle according to at least one of Claims 1 to 7, characterized in that the ornamental cap (22) is configured concavely at one end, to match that end region of the handle element (50) plunging into the opening in the moulded element (5).

9. Grab handle according to at least one of Claims 1 to 8, characterized in that the ornamental cap (22) is held captively on the moulded element (5), in that it is envisaged that the ornamental cap (22) exhibits, on the underside, a band element (28) having an anchor-shaped end region, which band element is formed on in one piece and is placed through the wall aperture (23) in the moulded element (5).

10. Grab handle according to at least one of Claims 1 to 9, characterized in that that end region of the handle element (50) plunging into the opening in the moulded element (5) is supported by an obliquely directed wall (7) of the moulded element (5), which wall is matched to the form of the said end region.

## Revendications

1. Poignée de maintien, en particulier pour véhicules automobiles, comportant un corps (50) en forme d'étrier, qui est constitué d'un noyau (2) pourvu d'une gaine (1) en forme de tuyau, dont les zones d'extrémité (3) coudées, non gainées, peuvent être fixées sur une carrosserie (4) d'un véhicule, chaque zone de fixation pouvant être recouverte par un capuchon enjoliveur (22), caractérisée en ce que chaque zone d'extrémité (3) du noyau (2) est pourvue d'un corps moulé (5) qui est constitué d'une plaque de fond (6) reposant sur la zone d'extrémité (3) du noyau (2) et fixée sur celle-ci ainsi que d'une plaque de tête (8), espacée de la plaque de fond (6) et reliée à celle-ci par des parois (7) faisant partie du corps moulé (5), cette plaque de tête présentant une ouverture entourée par un collet (18) dans laquelle s'engage une zone d'extrémité du corps de poignée (50) et qui peut en outre être fermée à fleur du collet par le capuchon enjoliveur (22), le corps moulé (5) comportant une patte de matière (9) formée d'une seule pièce, prolongeant la plaque de fond (6), laquelle patte est formée, par une pellicule charnière (10), sur la plaque de fond (6) de manière à pouvoir être rabattue autour de l'extrémité libre de la zone d'extrémité (3) du noyau (2), pour passer sous la zone d'extrémité (3).

2. Poignée de maintien selon la revendication 1, caractérisée en ce que le collet (18) est prévu pour recouvrir une zone de bordure (21) entourant une ouverture de montage (19) pratiquée dans un revêtement élastique du véhicule, tel qu'un habillage fini de plafond (20).

3. Poignée de maintien selon les revendications 1 ou 2, caractérisée en ce que le corps moulé (5) est un élément en matière plastique moulé par injection.

4. Poignée de maintien selon l'une au moins des revendications 1 à 3, caractérisée en ce que le corps moulé (5) est fixé sur le noyau (2) au moyen d'un rivet creux (16) traversant celui-ci et un alésage pratiqué dans la zone terminale du noyau, et en ce que le corps moulé (5) comporte, comme protection contre une rotation, une tige (12) formée d'une seule pièce, traversant un second alésage pratiqué dans la zone d'extrémité du noyau (2).

5. Poignée de maintien selon l'une des revendications 1 à 4, caractérisée en ce que la patte de matière (6) présente une première ouverture (14) pour le passage du tenon (12), une seconde ouverture (13) pour le passage du rivet creux (16) et en outre des éléments de clipsage (15), venus de moulage, qui entourent sur les bords la plaque de fond (6).

6. Poignée de maintien selon l'une au moins des revendications 1 à 5, caractérisée en ce que le capuchon enjoliveur (22), qui est réalisé sous la forme d'un élément en matière plastique moulé par injection, séparé, comporte à une extrémité un ergot d'arrêt (24) formé d'une seule pièce, pouvant s'accrocher dans un ajour (23) de la paroi du corps moulé (5) et à l'autre extrémité deux éléments de clipsage (25) se faisant face, formés d'une seule pièce, destinés à s'accrocher derrière le bord d'ouverture de la plaque de tête (8).

7. Poignée de maintien selon l'une au moins des revendications 1 à 6, caractérisée en ce que le bord d'ouverture de la plaque de tête (8) présente une partie en retrait (27) en forme de gradin, soutenant le capuchon enjoliveur (22).

8. Poignée de maintien selon l'une au moins des revendications 1 à 7, caractérisée en ce que le capuchon enjoliveur (22) est concave à une extrémité, pour s'adapter à la zone d'extrémité du corps (50) de la poignée, s'engageant dans l'ouverture du corps moulé (5).

9. Poignée de maintien selon l'une au moins des revendications 1 à 8, caractérisée en ce que le capuchon enjoliveur (22) est maintenu de manière imperdable sur le corps moulé (5), en ce qu'il est prévu que le capuchon enjoliveur (22) présente sur sa face inférieure un corps en bande (28) formé d'une seule pièce, enfilé à travers l'ajour (23) de la paroi du corps moulé (5), avec une zone d'extrémité en forme d'ancre.

10. Poignée de maintien selon l'une au moins des revendications 1 à 9, caractérisée en ce que la zone d'extrémité du corps de poignée (50), s'engageant dans l'ouverture du corps moulé (5), est soutenue par une paroi (7) du corps moulé (5), orientée obliquement, adaptée à sa forme.
